# EUROPÄISCHE PATENTANMELDUNG

(11) **EP 0 542 121 A1**
(43) Veröffentlichungstag der Anmeldung: **19.05.1993**
(21) Anmeldenummer: 92118917.1
(22) Anmeldetag: 05.11.1992
(51) Int. Cl.: G02B 6/30, G02B 6/42

(54) **Anordnung zur Ein- und Auskopplung von Licht in einen bzw. aus einem Wellenleiter**

(30) Priorität: 15.11.1991 DE 4137625
(71) Anmelder: JENOPTIK GmbH, D-07743 Jena (DE)
(72) Erfinder: Bischoff, Bernd, O-6900 Jena (DE); Rothhardt, Manfred, O-6900 Jena (DE); Voigt, Peter, O-6902 Jena (DE); Görlich, Steffen, O-6900 Jena (DE)

(57) **Zusammenfassung**

Die Erfindung betrifft eine Anordnung zur Ein- und Auskopplung von Licht in einen bzw. aus einem Wellenleiter (2), insbesondere für integriert-optische Chips (1).

Die erfindungsgemäße Anordnung weist an den Stirnflächen (3;4) des Wellenleiters (2) eines integriert-optischen Chips (1) geneigte Stirnflächen (3;4) auf. Die Ein- und Auskopplung des Lichtes erfolgt von der Chipunterseite, beispielsweise über eine Gradientenindex-Stablinse (5). Das Licht wird auf die geneigte Stirnfläche (3;4) fokussiert und in den Wellenleiter (2) reflektiert.

## Beschreibung

Die Erfindung betrifft eine optische Koppelanordnung für planare Wellenleiter. Sie kann in integriert-optischen Informations- und Meßsystemen eingesetzt werden.

Wesentlicher Bestandteil integriert-optischer Systeme sind Vorrichtungen, die der Ein- und Auskopplung der Strahlung dienen. Bekannt sind im wesentlichen Prismen-, Gitter- und Stirnflächenkopplung.

Die Kopplung durch Prismen (US 3584230), die auf den Wellenleiter aufgesetzt werden, hat sich wegen ihrer mechanischen Empfindlichkeit, der hohen Prismenkosten und der geringen Reproduzierbarkeit der Koppeleffektivität nicht durchgesetzt.

Gitterkoppler hoher Effektivität erfordern einen erheblichen Aufwand für die Erzeugung der Gitterstruktur im Wellenleiter (Journ. of Modern Optics, 1989, vol.36, No.10,1303 - 1320).

Die übliche technische Lösung ist die Stirnflächenkopplung (Bell Syst. Tech. Journ.,1971, vol.50, 43 ff.). Hierbei wird die Lichtquelle oder die Lichtaustrittsfläche einer Lichtleitfaser entweder unmittelbar gegenüber der polierten Wellenleiterstirnfläche angeordnet, oder die Kopplung in die Wellenleiterstirnfläche erfolgt durch optische Abbildung. Erforderlich sind Vorrichtungen zur gegenseitigen Fixierung von Lichtquelle und integriert-optischem Chip mit geringen Toleranzen. Nicht geeignet ist diese Kopplung für Anwendungen, bei denen über die eigentlichen Abmessungen des integriertoptischen Chips hinaus seitlich kein Platz für Koppeleinrichtungen vorhanden ist, wie es bei praktischen Anwendungen der integrierten Optik vorkommt.

Der Erfindung liegt die Aufgabe zugrunde, eine Koppelanordnung für Wellenleiter in Form eines integriert-optischen Chips zu schaffen, die die Nachteile des Standes der Technik bezüglich Herstellungsaufwand und Platzbedarf beseitigt.

Die Aufgabe wird erfindungsgemäß mit den in den Patentansprüchen genannten Maßnahmen gelöst.

Die Lichtstrahlung wird durch das Wellenleitersubstrat hindurch auf die geneigte Stirnfläche des Wellenleiters fokussiert. Die Einkopplung in den Wellenleiter erfolgt dann nach Reflexion an der geneigten Stirnfläche. Dabei ist Totalreflexion oder auch Reflexion an einer zusätzlich aufgebrachten Spiegelschicht möglich. Es ergibt sich keine störende Rückreflexion in die Lichtquelle. Dies ist insbesondere für interferometrische Meßsysteme günstig.

Für die Fokussierung sind Gradientenindex-Stablinsen vorteilhaft, deren Arbeitsabstand in einem Medium mit der Substratbrechzahl mit der Chipdicke übereinstimmt. Dadurch dient die Substratunterseite als Anlagefläche, und spezielle Abstandsjustiereinrichtungen werden vermieden.

Für Anwendungen, die das Auswechseln des integriert-optischen Chips erfordern, bietet die erfindungsgemäße kopplung den Vorteil, daß der erforderliche Koppelabstand durch Einhaltung der vorgegebenen Chipdicke gewährleistet ist, während die seitliche Fixierung durch Anlageflächen erreicht werden kann, die von der optischen Koppeleinrichtung räumlich getrennt sind.
Weiterhin bietet die erfindungsgemäße Kopplung den Vorteil, daß die gesamte Stirnfläche der Gradientenindex-Stablinse am integriert-optischen Chip anliegt, während bei der herkömmlichen Stirnflächenkopplung nur etwa die Hälfte der Stirnfläche als Anlagefläche bzw. zur Fixierung mit Kitt zur Verfügung steht.

Die Erfindung soll anhand von in Zeichnungen dargestellten Ausführungsbeispielen näher erläutert werden.
- Fig. 1: Koppelanordnung mit zwei geneigten Wellenleiterstirnflächen
- Fig. 2: Koppelanordnung mit einer geneigten Wellenleiterstirnfläche
- Fig. 3: Integriert-optischer Chip mit angekitteter Stablinse

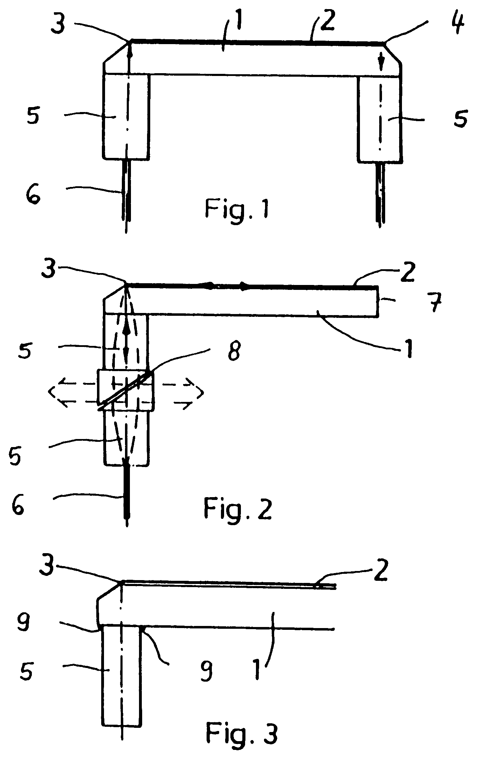

In Figur 1 weist der integriert-optische Chip 1 mit dem Wellenleiter 2 an denjenigen Kanten polierte geneigte Stirnflächen 3 und 4 auf, an denen Wellenleiter enden. Die unter etwa 45^{o} geneigten Stirnflächen 3 und 4 können zusätzliche Spiegelschichten tragen. Das Licht wird über eine Lichtwellenleiterfaser 6 durch eine Gradientenindex-Stablinse 5, die auf der Unterseite des Chips 1 angebracht ist, auf die geneigte Stirnfläche 3 im Bereich des Wellenleiters fokussiert. Durch Reflexion erfolgt hier die Einkopplung. Die Auskopplung erfolgt an der ebenfalls geneigten Stirnfläche 4 des Wellenleiters in eine zweite, auf der Unterseite des Chips angebrachte Lichtwellenleiterfaser 6 über eine GRINrod-Linse 5.

In Figur 2 ist die zweite Stirnfläche 7 senkrecht zum Wellenleiter 2 ausgebildet und mit einer Spiegelschicht versehen. Das Licht läuft im Wellenleiter 2 zurück, wird an der Einkoppelstelle nach Reflexion an der geneigten Stirnfläche 3 ausgekoppelt und durch die Gradientenindex-Stablinse 5 in die Faser 6 fokussiert. Die Trennung vom hinlaufenden Licht erfolgt im Strahlteiler 8.

Figur 3 zeigt, daß im Falle einer Kittverbindung zum einen die gesamte Stablinsenstirnfläche für die Kittung zur Verfügung steht und zum anderen der Vorteil besteht, daß die Kittfuge 9 vom Wellenleiter räumlich getrennt ist.

### Zusammenstellung der Bezugszeichen

- 1: integriert-optischer Chip
- 2: Wellenleiter
- 3, 4: Wellenleiterstirnfläche
- 5: Gradientenindex-Stablinse
- 6: Lichtwellenleiterfaser
- 7: verspiegelte Stirnfläche
- 8: Strahlteiler
- 9: Kittfuge

## Patentansprüche

1. Anordnung zur Ein- und Auskopplung von Licht in einen bzw. aus einem Wellenleiter, bestehend aus einem auf einem integriert-optischen Chip (1) gebrachten planaren Wellenleiter (2), dadurch gekennzeichnet,
daß mindestens eine der Stirnflächen (3, 4) des Wellenleiters (2) derart geneigt ist, daß der Winkel zwischen geneigter Stirnfläche (3, 4) und Unterseite des integriertoptischen Chips (1) etwa 45^{o} beträgt und die lichtführenden Mittel (5, 6) auf der Unterseite des Chips (1) so angebracht sind, daß das einfallende Licht durch das Substrat hindurch auf eine geneigte Stirnfläche (3, 4) fokussiert und dort in den Wellenleiter (2) reflektiert wird, und die Lichtauskopplung durch Reflexion an einer geneigten Stirnfläche (3, 4) erfolgt.

2. Anordnung nach Anspruch 1, dadurch gekennzeichnet,
daß beide Stirnflächen (3, 4) geneigt sind und die Ein- bzw. Auskopplung des Lichtes jeweils an einer Stirnfläche (3, 4) erfolgt.

3. Anordnung nach Anspruch 1, dadurch gekennzeichnet,
daß eine Stirnfläche (3) geneigt und die gegenüberliegende Stirnfläche (7) nicht geneigt ist und diese eine Spiegelschicht trägt und daß die Lichtein- und -auskopplung jeweils an der geneigten Stirnfläche (3) erfolgt, wobei die lichtführenden Mittel (5, 6) einen Strahlteiler (8) enthalten.

4. Anordnung nach mindestens einem der Ansprüche 1 bis 3, dadurch gekennzeichnet,
daß an der geneigten Stirnfläche (3) Totalreflexion stattfindet.

5. Anordnung nach mindestens einem der Ansprüche 1 bis 3, dadurch gekennzeichnet,
daß mindestens eine der geneigten Stirnflächen (3, 4) mit mindestens einer Schicht zur Erhöhung des Reflexionsgrades belegt ist. 6. Anordnung nach mindestens einem der Ansprüche 1 bis 3, dadurch gekennzeichnet,
daß zur Fokussierung des Lichtes eine Gradientenindex-Stablinse (5) dient, deren Arbeitsabstand in einem Medium mit der Substratbrechzahl annährend gleich der Dicke des integriert-optischen Chips (1) ist, so daß die Gradientenindex-Stablinse (5) mit einer ihrer Stirnfläche an der Substratrückseite des Chips anliegt.
